# EUROPÄISCHE PATENTSCHRIFT

(11) **EP 3 036 112 B1**
(45) Veröffentlichungstag und Bekanntmachung des Hinweises auf die Patenterteilung: **19.02.2020**
(21) Anmeldenummer: 14748219.4
(22) Anmeldetag: 08.08.2014
(51) Int. Cl.: B42D 25/00, B42D 25/324, B42D 25/328, B42D 25/373, B42D 25/435, B42D 25/47

(54) **SYSTEM UND VERFAHREN ZUM HERSTELLEN EINES INDIVIDUALISIERTEN SICHERHEITSELEMENTS**
SYSTEM AND METHOD FOR PRODUCING AN INDIVIDUALIZED SECURITY ELEMENT
SYSTÈME ET PROCÉDÉ DE RÉALISATION D'UN ÉLÉMENT DE SÉCURITÉ INDIVIDUALISÉ

(30) Priorität: 19.08.2013 DE 102013108906
(43) Veröffentlichungstag der Anmeldung: 29.06.2016
(73) Patentinhaber: OVD Kinegram AG, 6300 Zug (CH)
(72) Erfinder: STAUB, René, CH-6332 Hagendorn (CH); STREB, Christina, CH-5646 Abtwil (CH); ÖZDEMIR, Attila, CH-6330 Cham (CH); MÜLLER, Thomas, CH-6315 Oberägeri (CH)
(74) Vertreter: Louis Pöhlau Lohrentz
(86) Internationale Anmeldenummer: PCT/EP2014/067064
(87) Internationale Veröffentlichungsnummer: WO 2015/024797

(56) Entgegenhaltungen:
- EP-A1- 0 733 490
- WO-A1-01/02191
- WO-A2-2004/096571
- FR-A1- 2 843 559

## Beschreibung

Die Erfindung betrifft ein System zum Herstellen eines individualisierten Sicherheitselements, ein Verfahren zum Individualisieren eines solchen Sicherheitselements unter Verwendung eines derartigen Systems, sowie ein auf diese Weise hergestelltes Sicherheitselement in Form einer Vignette für einen Fahrzeug, welches bevorzugt mit einer Windschutzscheibe eines Fahrzeugs verklebt ist. Zum Nachweis, dass eine Straßenmaut erbracht wurde, eine Zulassung für den Straßenverkehr erfolgte, oder anderweitige Berechtigung zur Benutzung von Straßen, Brücken oder dergleichen besteht, werden oftmals Vignetten verwendet, die auf die Windschutzscheibe eines Transportmittels, beispielsweise eines Kraftwagens, geklebt werden. Zudem erlauben Vignetten auch die Identifikation von Besitzern und Haltern von Fahrzeugen und dienen als Diebstahlschutz. Neben Kraftfahrzeugen können auch andere Transportmittel zu den genannten Zwecken mit solchen Vignetten versehen werden.

An solche Vignetten bestehen mehrfache Anforderungen. Zum einen muss einfach geprüft werden können, dass die Vignette authentisch, also keine Fälschung ist. Ferner ist es wünschenswert, dass eine solche Vignette nicht von der Windschutzscheibe eines Transportmittels abgelöst und auf die Windschutzscheibe eines anderen Transportmittels übertragen werden kann, so dass die Vignette nicht missbräuchlich für mehrere Transportmittel verwendet werden kann. Um einen solchen Missbrauch zu vermeiden, ist es zudem zweckmäßig, die Vignette zu individualisieren, d.h. beispielsweise mit dem Zulassungskennzeichen des zugeordneten Fahrzeugs zu markieren. Eine solche Individualisierung muss dabei einfach anzubringen sein, darf aber gleichzeitig nicht für Manipulationen zugänglich sein.

Es ist daher Aufgabe der vorliegenden Erfindung, ein System und Verfahren zur Herstellung einer besonders fälschungs- und manipulationssicheren, sowie einfach zu individualisierenden Vignette bereitzustellen.

Diese Aufgabe wird durch ein System zum Herstellen eines Sicherheitselements, in Form einer Vignette zum Verkleben mit einem Zielsubstrat, für eine Oberfläche, insbesondere eine Sichtscheibe eines Transportmittels, gemäß Anspruch 1, gelöst, welches ein Trägerelement mit einer ersten und einer zweiten Oberfläche umfasst, wobei in einem ersten Bereich der ersten Oberfläche ein erstes Teilelement des Sicherheitselements und in einem zweiten, durch eine Falzkante vom ersten Bereich getrennten Bereich der ersten Oberfläche ein zweites Teilelement des Sicherheitselements angeordnet ist, welches durch Falzen des Trägerelements entlang der Falzkante in Überdeckung mit dem ersten Teilelement bringbar ist, wobei das zweite Teilelement ein Klebemittel aufweist, welches auf der dem Trägerelement abgewandten Seite des zweiten Teilelements angeordnet ist, und wobei auf einer dem Trägerelement abgewandten Seite des ersten und/oder zweiten Teilelements ein Individualisierungsmerkmal anbringbar ist, wobei das zweite Teilelement in allen in der Erstreckungsebene des Trägerelements gelegenen Richtungen eine größere Erstreckungsbreite aufweist als das erste Teilelement.

Die Aufgabe wird ferner durch ein Verfahren zum Individualisieren eines Sicherheitselements in Form einer Vignette zum Verkleben mit einem Zielsubstrat, für eine Windschutzscheibe eines Fahrzeugs, gemäß Anspruch 11, gelöst, welches die folgenden Schritte umfasst:
a) Bereitstellen eines Systems zum Herstellen eines Sicherheitselements wie oben beschrieben;
b) Anbringen eines Individualisierungsmerkmals auf einer dem Trägerelement abgewandten Seite des ersten Teilelements und/oder des zweiten Teilelements;
c) Falzen des Trägerelements entlang der Falzkante, wobei die Teilelemente in Überdeckung miteinander gebracht werden
d) Verkleben der Teilelemente mittels eines auf der dem Trägerelement abgewandten Seite des zweiten Teilelements angeordneten Klebemittels.

Unter Fahrzeuge sollen dabei im Folgenden insbesondere Landfahrzeuge, wie beispielsweise Kraftfahrzeuge, Lastkraftwagen, Zweiräder, Schlitten oder dergleichen, Wasserfahrzeuge, wie beispielsweise Schiffe, Boote, Jetskis, Unterseeboote oder dergleichen, sowie Luft- und Raumfahrzeuge, wie beispielsweise Flugzeuge, Helikopter, Ballons, Gleiter oder dergleichen, verstanden werden.

WO 2004/096571 A2 offenbart ein Verfahren zum Herstellen eines Mehrschichtkörpers, bei welchem zwei Teilelemente des endgültigen Mehrschichtkörpers auf einem Träger bereitgestellt werden. Durch Falten des Trägers an einem Falz können die Teilelemente in Überdeckung gebracht und verklebt werden. Die Lehre der relevantesten Ausführungsform dieses Dokuments betrifft jedoch ausschließlich eine Karte. Das Dokument EP 0 733 490 A1 beschreibt ein Verfahren zum Herstellen einer Vignette, bei der zwei Teilelemente durch Falten in Überdeckung gebracht und verklebt werden. Dieses Dokument offenbart jedoch nicht, dass das zweite Teilelement in allen in der Erstreckungsebene des Trägerelements gelegenen Richtungen eine größere Erstreckungsbreite aufweist als das erste Teilelement.

Im Vergleich mit dem Stand der Technik erlaubt das System bzw. Verfahren der vorliegenden Erfindung, Sicherheitselemente außerhalb des eigentlichen Herstellungsprozesses zu individualisieren. Das System selbst kann also industriell gefertigt werden und dann Ausgabestellen für Vignetten geliefert werden. Erst bei der Ausgabe einer individuellen Vignette wird dann in der Ausgabestelle das Individualisierungsmerkmal, beispielsweise die Registrierung des Transportmittels, für das die Vignette bestimmt ist, aufgebracht. Dies kann beispielsweise durch Drucken, insbesondere durch Druckverfahren wie Tintenstrahldruck, Thermotransferdruck oder Xerographie (Laserdruck), geschehen. Durch das anschließende Verkleben der Teilelemente wird das

Individualisierungsmerkmal in den Schichtaufbau der Teilelemente eingeschlossen und ist von außen nicht mehr zugänglich. Somit sind spätere Manipulationen am Individualisierungsmerkmal nicht mehr zerstörungsfrei möglich, so dass eine missbräuchliche Verwendung der Vignette, beispielsweise für ein anderes Transportmittel, nicht mehr erfolgen kann. Es wird also eine Möglichkeit geschaffen, Sicherheitselemente in Form von Vignetten besonders einfach und gleichzeitig missbrauchssicher zu individualisieren.

Vorteilhafte Ausführungsformen ergeben sich aus den Unteransprüchen 2 bis 13.

Vorzugsweise umfasst das erste und/oder zweite Teilelement zumindest eine Replizierschicht, in welche zumindest eine Reliefstruktur eingeformt ist. Es ist dabei besonders vorteilhaft, wenn die Replizierschicht eine Schichtdicke von 0,2 bis 20 µm, bevorzugt von 0,5 bis 5 µm und besonders bevorzugt von 0,5 bis 2,5 µm aufweist. Replizierschichten mit derartigen Reliefstrukturen sind nur mit beträchtlichem Aufwand präzise herzustellen. Dies führt zu einer besonders großen Fälschungssicherheit.

Unter einer Replizierschicht wird allgemein eine oberflächlich mit einer Reliefstruktur herstellbare Schicht verstanden. Darunter fallen beispielsweise organische Schichten wie Kunststoff- oder Lackschichten oder anorganische Schichten wie anorganische Kunststoffe (z.B. Silikone), Halbleiterschichten usw., aber auch Kombinationen daraus. Es ist bevorzugt, dass die Replizierschicht als eine Replizierlackschicht ausgebildet ist. Zur Ausbildung der Reliefstruktur kann eine strahlungshärtbare oder wärmehärtbare (thermosetting) Replizierschicht oder eine thermoplastische, insbesondere thermisch trocknende Replizierlackschicht aufgebracht werden, ein Relief in die Replizierschicht abgeformt werden und die Replizierschicht ggf. mit dem darin eingeprägten Relief ausgehärtet werden.

Bevorzugt ist die wenigstens eine Reliefstruktur als insbesondere ein- oder zweidimensionale diffraktive Gitterstruktur ausgebildet ist, insbesondere mit einer Spatialfrequenz zwischen 100 Linien/mm und 4000 Linien/mm, bevorzugt zwischen 1000 Linien/mm und 2000 Linien/mm.

Es ist dabei zweckmäßig, wenn die wenigstens eine Reliefstruktur von ein oder mehreren Reliefstrukturen gebildet ist, ausgewählt aus: lichtbeugenden und/oder lichtbrechenden und/oder lichtstreuenden und/oder lichtfokussierenden Mikro- oder Nanostrukturen, isotropen oder anisotropen Mattstrukturen, binäre oder kontinuierliche Fresnelllinsen, Mikroprismenstrukturen, Blazegitter mit einer Spatialfrequenz zwischen 100 Linien/mm und 1500 Linien/mm, achromatische Gitterstrukturen mit Spatialfrequenzen zwischen 50 Linien/mm und 300 Linien/mm, Beugungsstrukturen Nullter Ordnung, insbesondere mit einer Spatialfrequenz zwischen 2500 Linien/mm und 4000 Linien/mm, Mikrolinsenfeldern, insbesondere mit einem Durchmesser der Mikrolinsen zwischen 5 µm und 50 µm, und Kombinationsstrukturen aus diesen.

Durch derartige Strukturen können vielfältige optische Effekte dargestellt werden, die sowohl für ein ansprechendes Erscheinungsbild sorgen, als auch die Fälschungssicherheit erhöhen.

Vorzugsweise weist das erste und/oder zweite Teilelement zumindest eine Reflexionsschicht, insbesondere eine Metallschicht oder eine HRI-Schicht auf. Solche Schichten können einen optischen Hintergrund und/oder eine optisch wirksame Grenzschicht für eine Replizierschicht schaffen und damit deren reflektive oder refraktive Eigenschaften modifizieren. Die zumindest eine Reflexionsschicht ist somit bevorzugt auf der zumindest einen mit einer Reliefstruktur versehenen Oberfläche der Replizierschicht angebracht. Sie kann aber auch für sich genommen zur Darstellung optischer Effekte dienen. Als Metall für die Metallschichten wird vorzugsweise Aluminium, Kupfer, Gold, Silber, Chrom oder eine Legierung aus diesen Metallen verwendet. Unter einer HRI-Schicht wird dabei eine Schicht aus einem Material mit hohem Brechungsindex (HRI = "High Refractive Index") verstanden. Dabei kann es sich beispielsweise um Zinksulfid, oder Titandioxid handeln. Weiterhin sind auch Dünnschichtsysteme mit einer Abfolge aus Schichten mit unterschiedlichen Brechungsindizes möglich, beispielsweise ein Schichtpaket aus einer HRI-Schicht, gefolgt von einer LRI-Schicht (LRI = "Low Refractive Index"), sowie von einer weiteren HRI-Schicht. Als LRI-Schicht kann beispielsweise Magnesiumfluorid eingesetzt werden.

Vorteilhafterweise ist die zumindest eine Reflexionsschicht musterförmig, insbesondere in Form einer ersten optischen Information ausgeformt. Eine solche Reflexionsschicht kann zur Erzeugung optischer Effekte und insbesondere als zusätzliches Sicherheitselement dienen.

Das erste und/oder zweite Teilelement kann dabei auch zwei oder mehr unterschiedliche Reflexionsschichten aufweisen, welche insbesondere aus unterschiedlichen metallischen Materialien gebildet sind, und welche insbesondere in Form von unterschiedlichen ersten optischen Informationen ausgeformt sind. Gerade wenn ein optischer Eindruck bzw. eine optische Information erst durch das Zusammenwirken zweier oder mehrerer Schichten gebildet wird, wird eine besonders gute Fälschungssicherheit erzielt, da der gewünschte optische Eindruck nur dann entsteht, wenn die zusammenwirkenden Schichten präzise im Register, d.h. passergenau bzw. registergenau zueinander angeordnet sind, was bei Fälschungen nur schwer zu erreichen ist.

Der Begriff "Passergenauigkeit" bzw. "Registergenauigkeit" stammt aus der Drucktechnologie. Dort werden Passermarken bzw. Registermarken verwendet, die auf verschiedenen Schichten oder Lagen aufgebracht sind. Anhand dieser Passermarken bzw. Registermarken ist es sehr leicht möglich, die exakte relative Lagengenauigkeit der Lagen oder Schichten zueinander einzustellen und damit eine sogenannte Passergenauigkeit oder Registergenauigkeit zu erreichen. "Im Register" heißt also, dass die jeweiligen Lagen oder Schichten anhand der Passermarken bzw. Registermarken hinreichend genau zueinander lagengenau ausgerichtet sind. Im Folgenden werden diese Begrifflichkeiten in diesem Sinne verwendet. D.h. es geht darum, aufeinanderliegende Schichten möglichst genau relativ zueinander auszurichten und sie "im Register" anzuordnen.

Weiter ist in der zumindest einen Reflexionsschicht vorzugsweise zumindest ein transparentes Fenster vorgesehen, in welchem das Material der Reflexionsschicht nicht vorgesehen ist. In diesem Fenster wird vorzugsweise später das Individualisierungsmerkmal angeordnet.

Zweckmäßigerweise weist die Reflexionsschicht eine Schichtdicke von 0,005 µm bis 2 µm, bevorzugt von 0,01 µm bis 0,2 µm und besonders bevorzugt von 0,02 µm bis 0,1 µm auf.

Bevorzugt umfasst das erste und/oder zweite Teilelement zumindest eine partielle optisch variable Schicht und/oder ein optisch variables Schichtsystem. Diese Schicht bzw. dieses Schichtsystem besitzt zumindest eine kleinere laterale Abmessung als das erste bzw. zweite Teilelement und überdeckt somit die angrenzende Schicht des ersten oder zweiten Teilelements lediglich bereichsweise. Die Schicht bzw. das Schichtsystem ist bevorzugt so ausgebildet, dass diese mindestens einen Stoff, insbesondere in gelöster Form oder in Partikel- oder Pigmentform mit blickwinkelabhängig unterschiedlichem optischem Effekt enthält und/oder mindestens eine Flüssigkristallschicht mit blickwinkelabhängig unterschiedlichem optischem Effekt und/oder einen Dünnfilm-Schichtstapel mit blickwinkelabhängigem Interferenzfarbeffekt und/oder eine Replizierschicht mit eingeformter Reliefstruktur umfasst, die insbesondere die vorstehend beschriebenen Ausbildung besitzt.

Mit solchen blickwinkelabhängig unterschiedlichen optischen Effekten können zusätzliche Sicherheitsmerkmale implementiert werden. So kann beispielsweise - auch im Zusammenspiel mit weiteren Schichten des Sicherheitselements - ein Sicherheitsmerkmal zur Authentifizierung des Sicherheitselements geschaffen werden, welches nur aus einem bestimmten Blickwinkel vollständig sichtbar ist. Auch dies erhöht die Fälschungssicherheit.

Es ist weiter zweckmäßig, wenn das erste Teilelement eine erste Kleberschicht, insbesondere zum Verkleben des Sicherheitselements mit der Windschutzscheibe des Transportmittels umfasst, und dass die erste Kleberschicht auf der dem Trägerelement zugewandten Seite des ersten Teilelements angeordnet ist, so dass das fertige Sicherheitselement zuverlässig auf seinem Zielsubstrat befestigt werden kann.

Vorzugsweise ist dabei die erste Kleberschicht eine Kaltkleberschicht, insbesondere mit einer Schichtdicke von 1 µm bis 40 µm, bevorzugt von 5 µm bis 25 µm und besonders bevorzugt von 10 µm bis 20 µm.

Zweckmäßigerweise ist zwischen dem ersten Teilelement und dem Trägerelement eine Ablöseschicht, insbesondere eine Silikonschicht angeordnet. Diese erlaubt ein leichtes Entfernen des Trägerelements, wobei die erste Kleberschicht freigelegt wird, so dass das Sicherheitselement einfach zu befestigen ist.

Es ist weiterhin vorteilhaft, wenn das erste Teilelement eine insbesondere selbsttragende Polymerschicht, beispielsweise aus oder mit Polyester, insbesondere PET (Polyethylenterephthalat), PVC (Polyvinylchlorid), PP (Polypropylen) umfasst. Diese verleiht dem ersten Teilelement Stabilität und kann als Träger für das Individualisierungsmerkmal und gegebenenfalls weiterer Sicherheitsmerkmale dienen. Bevorzugt ist die Polymerschicht eine selbsttragende Folie.

Vorzugsweise besteht diese Polymerschicht aus Polyester und weist eine Schichtdicke von 6 bis 125 µm, bevorzugt von 6 bis 75 µm und besonders bevorzugt von 6 bis 50 µm auf.

Es ist ferner zweckmäßig, wenn das erste Teilelement eine Lackschicht, insbesondere eine Haftvermittlungsschicht zur Erhöhung der Haftung des Individualisierungsmerkmals aufweist, wobei die Lackschicht auf der dem Trägerelement abgewandten Seite der Polymerschicht aufgebracht ist. Diese Ausführungsform ist insbesondere vorteilhaft, wenn das Individualisierungsmerkmal aufgedruckt wird, so dass eine sichere Haftung der Druckfarbe sichergestellt wird. Diese Lackschicht kann weiterhin einen Sicherheitsdruck aufweisen und/oder lokal unterschiedliche Haftungseigenschaften zur Polymerschicht aufweisen, sodass sie sich bei Manipulationsversuchen zerstört. Derartige Schichten können auch auf der dem Trägerelement zugewandten Seite der Polymerschicht vorliegen.

Um die Fälschungssicherheit des Sicherheitselements weiter zu verbessern, kann die partielle optisch variable Schicht bzw. das Schichtsystem auf der dem Trägerelement abgewandten Seite der Polymerschicht, insbesondere auf der Lackschicht angeordnet sein, und das Individualisierungsmerkmal in einer gemeinsamen Schichtebene mit der partiellen optisch variablen Schicht bzw. Schichtsystem, insbesondere neben der Schicht bzw. dem Schichtsystem, aufbringbar sein bzw. aufgebracht werden. Das Individualisierungsmerkmal kann dabei beispielsweise im Zusammenspiel mit der partiellen optisch variablen Schicht wahrnehmbare Strukturen ausbilden, die der Authentifizierung des Sicherheitselements dienen können.

Es ist ferner zweckmäßig, wenn die Klebemittel zum Verkleben des ersten und zweiten Teilelements eine zweite Kleberschicht, insbesondere eine Kaltkleberschicht, umfassen. Diese weist zweckmäßigerweise eine Schichtdicke von 1 µm bis 40 µm, bevorzugt von 5 µm bis 25 µm und besonders bevorzugt von 10 µm bis 20 µm auf.

Vorzugsweise umfassen die Klebemittel eine Ablöseschicht, insbesondere eine ablösbare, silikonisierte Papier- oder Folienschicht, die auf der dem Trägerelement abgewandten Seite auf die zweite Kleberschicht aufgebracht ist, und welche insbesondere die darunter liegende zweite Kleberschicht mindestens bereichsweise überragt. Eine solche Ablöseschicht schützt das System vor versehentlicher fälschlicher Verklebung und ist aufgrund des Überstandes besonders leicht abzulösen, wenn die Verklebung erfolgen soll. Durch das Ablösen der Ablöseschicht wird dabei die zweite Kleberschicht freigegeben. Liegt die Ablöseschicht ohne Überstand vor, ist es vorteilhaft, wenn sie nicht zusammenhängend vorliegt, sondern beispielsweise eine Stanzung aufweist. So trennt sich beispielsweise durch Biegen des Trägerelements die Ablöseschicht an der Stanzung auf und die beiden Teilbereiche können einfach entfernt werden.

Die Papier- oder Folienschicht weist dabei zweckmäßigerweise eine Schichtdicke von 30 µm bis 300 µm, bevorzugt von 40 µm bis 160 µm und besonders bevorzugt von 60 µm bis 120 µm auf.

Bevorzugt umfasst das zweite Teilelement eine Ablöseschicht zum Ablösen des zweiten Teilelements von dem Trägerelement. Somit kann auch das zweite Teilelement auf einfache Weise vom Trägerelement getrennt werden, wenn das individualisierte Sicherheitselement auf sein Zielsubstrat aufgebracht werden soll.

Diese Ablöseschicht weist vorzugsweise zumindest eine Polymerschicht, insbesondere eine Polyesterschicht, mit einer Schichtdicke von 6 µm bis 125 µm, bevorzugt von 6 µm bis 75 µm und besonders bevorzugt von 6 µm bis 50 µm auf. Eine oder mehrere der Polymerschichten können dabei beim Ablösen der Ablöseschicht am zweiten Teilelement verbleiben oder aber auch mit abgelöst werden.

Vorzugsweise umfasst die Ablöseschicht zumindest eine UV-Kleberschicht. Diese weist zweckmäßigerweise eine Schichtdicke von 0,1 µm bis 10 µm, bevorzugt von 0,1 µm bis 5 µm und besonders bevorzugt von 0,2 µm bis 2,5 µm auf. Eine solche UV-Kleberschicht kann einfach von ihrem Substrat, insbesondere von einer der Polymerschichten gelöst werden. Durch UV-Härtung kann dabei sichergestellt werden, dass nach Lösen der Ablöseschicht keine Klebewirkung verbleibt.

Weiterhin ist es möglich, die Oberfläche der Polymerschichten derart zu modifizieren, dass üblicherweise auf dem jeweiligen Polymer, insbesondere auf Polyester, gut haftende Klebersysteme, wie beispielsweise Kaltkleber, wieder ablösbar sind. Dies kann beispielsweise mittels einer Silikonisierung der Polymerschichten erfolgen oder mit einer dünnen Ablöseschicht, die mittels eines wachsbasierten Systems angebunden ist.

Alternativ kann das zweite Teilelement zumindest eine reversibel lösbare Kleberschicht umfassen. Solche Kleberschichten sind beispielsweise von Haftnotizen aus Papier bekannt. Hier ist eine Schichtdicke von 1 µm bis 40 µm, bevorzugt von 5 µm bis 25 µm und besonders bevorzugt von 10 µm bis 20 µm besonders zweckmäßig.

Besonders bevorzugt ist die UV-Kleberschicht bzw. die reversibel lösbare Kleberschicht zwischen zwei Polymerschichten angeordnet ist. Bei einer solchen Anordnung verbleibt eine Polymerschicht am Trägerelement und die andere Polymerschicht am zweiten Teilelement. Dies erleichtert sowohl das Ablösen der Ablöseschicht und verleiht dem zweiten Teilelement durch die verbleibende Polymerschicht zusätzliche Stabilität.

Es ist weiter vorteilhaft, wenn sich die Ablöseschicht in der Flächenebene des Trägerelements in zumindest einer Richtung über zumindest eine weitere Schicht des zweiten Teilelements hinaus erstreckt. An diesem Überstand kann die Ablöseschicht beim Ablösen des zweiten Teilelements von dem Trägerelement gegriffen werden, so dass das Ablösen erleichtert wird.

Bevorzugt weist das zweite Teilelement zumindest eine Haftschicht auf, die bereichsweise unterschiedliche Hafteigenschaften zu den angrenzenden Schichten besitzt und insbesondere an den Stellen, an denen sie vorgesehen ist, die Haftung der angrenzenden Schichten erhöht oder verringert. Nachdem das fertig individualisierte Sicherheitselement auf sein Zielsubstrat aufgebracht ist, verhindert eine solche Haftschicht zuverlässig ein zerstörungsfreies Ablösen des Sicherheitselements vom Zielsubstrat, so dass dieses nicht missbräuchlich beispielsweise auf ein anderes Transportmittel überführt werden kann.

Die Hafteigenschaften der Haftschicht sind dabei so eingestellt, dass bei einem Ablöseversuch im Bereich der höheren Zwischenschichthaftung zumindest ein Teil des zweiten Teilelements beispielsweise mit der Polymerschicht abgezogen wird und im Bereich der geringeren Zwischenschichthaftung sich die Polymerschicht von den übrigen Schichten des zweiten Teilelements löst, wodurch das Sicherheitsmerkmal zerstört wird. Die Bereiche der höheren und geringeren Zwischenschichthaftung können dabei auch so angeordnet sein, dass sie eine optische Information darstellen, die bei einem solchen Ablöseversuch sichtbar wird. Beispielsweise kann ein Schriftzug wie "INVALID" beim Ablösen sichtbar werden.

Zweckmäßigerweise umfasst diese Haftschicht eine Haftvermittlerschicht. Dabei kann es sich beispielsweise um einen Kleber handeln. Die Haftvermittlerschicht weist vorteilhafterweise eine Schichtdicke von 0,005 µm bis 20 µm, bevorzugt von 0,5 µm bis 5 µm und besonders bevorzugt von 0,5 µm bis 2,5 µm auf.

Ferner ist vorzugsweise vorgesehen, dass die Haftschicht eine partielle Wachsschicht oder eine partielle Kleberschicht umfasst. Eine solche partielle Wachs- oder Kleberschicht kann die Haftung der Haftvermittlerschicht an angrenzenden Schichten lokal erniedrigen bzw. erhöhen, so dass die gewünschte lokale Variation der Zwischenschichthaftung erreicht wird, die beim Versuch, das fertige Sicherheitselement von seinem Zielsubstrat zu lösen, zur Zerstörung des Sicherheitselements führt.

Die partielle Wachsschicht bzw. Kleberschicht weist dabei vorteilhaft eine Schichtdicke von 0,002 µm bis 1 µm, bevorzugt von 0,005 µm bis 0,2 µm und besonders bevorzugt von 0,005 µm bis 0,1 µm auf.

Besonders zweckmäßig ist es, wenn die Haftschicht zwischen der Replizierschicht und der Ablöseschicht angeordnet ist. Bei einem Versuch, das Sicherheitselement von seinem Zielsubstrat abzulösen, wird dabei zwangsläufig die Replizierschicht beschädigt. Dies ist unmittelbar anhand der beschädigten charakteristischen optischen Sicherheitsmerkmale bzw. optischen Effekte der Replizierschicht erkennbar. Damit ist es sofort offensichtlich, wenn eine Vignette missbräuchlich für mehrere Transportmittel verwendet wird.

Vorzugsweise ist das Trägerelement aus transparentem, transluzentem oder opakem Polymer, insbesondere Polyester, bevorzugt PET (Polyethylenterephthalat) ausgebildet. Dies ermöglicht die Belichtung eventuell vorgesehener photosensitiver Schichten, wie beispielsweise einer UV-Lackschicht, durch das Trägerelement hindurch. Dies ist besonders vorteilhaft, wenn keine Belichtung durch die auf der dem Trägerelement abgewandten Seite der photosensitiven Schicht angeordneten weiteren Schichten möglich ist, da diese für die notwendige Wellenlänge nicht transparent sind.

Ein solches Trägerelement aus Polyester weist bevorzugt eine Schichtdicke von 25 µm bis 250 µm, bevorzugt von 50 µm bis 150 µm und besonders bevorzugt von 50 µm bis 120 µm auf.

Alternativ kann das Trägerelement auch aus Papier ausgebildet sein, falls beispielsweise keine Belichtung durch das Trägerelement hindurch notwendig sein sollte.

In diesem Fall ist es zweckmäßig, wenn das Trägerelement eine Schichtdicke von 30 µm bis 300 µm, bevorzugt von 40 µm bis 160 µm und besonders bevorzugt von 60 µm bis 120 µm aufweist.

Ferner kann das erste und/oder das zweite Teilelement einen Schnitt aufweisen, welcher sich von einer dem Trägerelement abgewandten Oberfläche des jeweiligen

Teilelements senkrecht zur Erstreckungsebene der Trägerschicht durch zumindest eine Schicht des jeweiligen Teilelements erstreckt.

Es ist weiterhin vorteilhaft, wenn dass das zweite Teilelement in allen in der Erstreckungsebene des Trägerelements gelegenen Richtungen eine größere Erstreckungsbreite aufweist als das erste Teilelement. Beim Aufkleben des fertig individualisierten Sicherheitselements auf sein Zielsubstrat erstreckt sich dann das zweite Teilelement über das erste Teilelement, welches auf dem Zielsubstrat, beispielsweise einer Windschutzscheibe, aufgeklebt ist. Der überstehende Bereich kann dann ebenfalls mit dem Zielsubstrat verklebt werden.

Bevorzugt wird das Individualisierungsmerkmal durch Drucken, insbesondere durch Druckverfahren wie Tintenstrahldruck oder Xerographie (Laserdruck), aufgebracht. Eine derartige Individualisierung kann besonders einfach und ohne großen technischen Aufwand durchgeführt werden, was beispielsweise direkt in der Ausgabestelle für Vignetten erfolgen kann. Weiterhin ist es auch möglich, mit einem Laser eine Kennzeichnung durch einzubringen, indem beispielsweise eine Reflexionsschicht oder eine Farbschicht verändert wird. Diese Veränderung kann ein lokales Abtragen (Ablation) der jeweiligen Schicht bedeuten oder eine Schwärzung, Bleichung oder eine andere Farbveränderung.

Das Individualisierungsmerkmal kann auch indirekt aufgebracht werden, beispielweise in Form eines separaten Etiketts oder eines anderen Transferelements. Beispielsweise kann das Etikett in einem separaten Prozess und/oder Vorrichtung insbesondere mit personalisierten oder individualisierten Informationen versehen werden, beispielsweise durch Druckverfahren wie Tintenstrahldruck oder Xerographie (Laserdruck) oder mit einem Laser, indem beispielsweise eine Substratschicht, Reflexionsschicht oder eine Farbschicht des Etiketts verändert wird. Diese Veränderung kann ein lokales Abtragen (Ablation) der jeweiligen Schicht bedeuten oder eine Schwärzung, Bleichung oder eine andere Farbveränderung. Danach wird dieses bedruckte Etikett als Individualisierungsmerkmal aufgebracht.

Vorzugsweise wird als Individualisierungsmerkmal eine Seriennummer, ein Barcode, ein Name, ein Kraftfahrzeugkennzeichen oder dgl. aufgebracht wird. Dies ermöglicht beispielsweise die direkte Zuordnung des Sicherheitselement in Form einer Vignette zu einem spezifischen Transportmittel oder dessen Halter.

Beim Fertigstellen des individualisierten Sicherheitselements wird bevorzugt vor dem Falzen in Schritt c) eine Ablöseschicht, insbesondere eine silikonisierte Papierschicht von einer dem Trägerelement abgewandten Oberfläche des zweiten Teilelements abgelöst und so die Kleberschicht der die Ablöseschicht und die Kleberschicht umfassenden Klebemittel zum Verkleben in Schritt d) freigelegt werden. Anschließend werden vorzugsweise die Teilelemente so in Überdeckung gebracht, dass das zweite Teilelement allseitig über das erste Teilelement hinausragt um so, wie oben beschrieben, einen überstehenden Rand zu schaffen, der es ermöglicht, dass beide Teilelemente mit dem Zielsubstrat verklebt werden. Durch den überstehenden Rand werden zusätzlich die Seitenflächen des Schichtverbundes des Sicherheitselements geschützt, so dass eine unerwünschte Delaminierung vermieden werden kann.

Bevorzugt wird in einem weiteren Schritt e) das Trägerelement von den verklebten Teilelementen abgelöst. Die individualisierten und verklebten Teilelemente bilden nun das fertige Sicherheitselement, welches nur noch auf sein Zielsubstrat geklebt werden muss.

Hierbei wird vorzugsweise das Trägerelement entlang einer Ablöseschicht, insbesondere einer Silikonschicht, vom ersten Teilelement abgelöst, wobei eine Kleberschicht des ersten Teilelements freigegeben wird, mittels welcher das Sicherheitselement mit einer Oberfläche, insbesondere einer Windschutzscheibe eines Fahrzeugs, verklebbar ist.

Die Ablösung kann so erfolgen, dass in Schritt e) das Trägerelement so vom zweiten Teilelement abgelöst wird, dass sich eine Ablöseschicht des zweiten Teilelements so trennt, dass eine Kleberschicht der Ablöseschicht am Trägerelement verbleibt und eine Polymerschicht eine Oberfläche des Sicherheitselements bildet.

Die Kleberschicht ist dabei vorzugsweise, wie bereits beschrieben, eine UV-Kleberschicht, Kaltkleberschicht oder reversibel lösbare Kleberschicht ist.

Die Erfindung wird beispielhaft anhand der Zeichnungen erläutert. Es zeigen:
- Fig. 1: Eine schematische Schnittdarstellung eines ersten Ausführungsbeispiels eines Systems zur Herstellung einer individualisierten Vignette;
- Fig. 2: Eine schematische Schnittdarstellung eines zweiten Ausführungsbeispiels eines Systems zur Herstellung einer individualisierten Vignette;
- Fig. 3: Eine schematische Schnittdarstellung eines dritten Ausführungsbeispiels eines Systems zur Herstellung einer individualisierten Vignette;
- Fig. 4: Eine schematische Schnittdarstellung eines vierten Ausführungsbeispiels eines Systems zur Herstellung einer individualisierten Vignette;
- Fig. 5: Eine schematische Schnittdarstellung eines fünften Ausführungsbeispiels eines Systems zur Herstellung einer individualisierten Vignette;
- Fig. 6: Eine schematische Schnittdarstellung eines sechsten Ausführungsbeispiels eines Systems zur Herstellung einer individualisierten Vignette;
- Fig. 7a-j: Eine schematische Schnittdarstellung durch ein Ausführungsbeispiel eines Systems zur Herstellung einer individualisierten Vignette während der Durchführung eines Verfahrens zur Herstellung der Vignette;
- Fig. 8: Eine schematische Schnittdarstellung einer fertigen, auf eine Windschutzscheibe applizierten Vignette.

Ein System 100 zum Herstellen einer personalisierten Vignette für ein Transportmittel umfasst ein erstes Teilelement 1 und ein zweites Teilelement 2, die jeweils auf einem Trägerelement 3 angeordnet sind. Zwischen den Bereichen 31 und 32 des Trägerelements, auf denen jeweils die Teilelemente 1, 2 angeordnet sind, weist das Trägerelement 3 eine Falzkante 33 auf. Im Bereich 31 des Trägerelements 3, auf dem das erste Teilelement 1 angeordnet ist, ist das Trägerelement 3 auf seiner dem Teilelement 1 zugewandten Oberfläche mit einer Ablöseschicht 34 versehen, die vorzugsweise als Silikonschicht ausgebildet ist.

Das erste Teilelement 1 ist mit einer Kaltkleberschicht 11 mit der Ablöseschicht 34 verbunden. In Richtung vom Trägerelement 3 weg folgt auf die Kaltkleberschicht 11 eine Polymerschicht 12, beispielsweise aus oder mit Polyester, insbesondere PET (Polyethylenterephthalat), PVC (Polyvinylchlorid) oder PP (Polypropylen), auf deren Oberfläche eine partielle optisch variable Schicht 13 und, in der gleichen Schichtebene, ein aufgedrucktes Individualisierungsmerkmal 14 vorgesehen sind, wobei sich das Individualisierungsmerkmal 14 und die partielle optisch variable Schicht 13 zumindest teilweise überlappen können.

Das zweite Teilelement 2 ist mit einer Ablöseschicht 21 auf der gleichen Seite des Trägerelements wie das erste Teilelement 1 befestigt. Die Ablöseschicht 21 umfasst eine UV-Kleberschicht 21a auf der dem Trägerelement 3 zugewandten Seite. An diese schließt sich in Richtung vom Trägerelement 2 weg eine Polymerschicht 21b an. Auf die Ablöseschicht 21 folgt eine Haftschicht 22, die eine Haftvermittlerschicht 22 a und eine partielle Wachsschicht 22b umfasst. An diese schließt sich eine Replizierschicht 23 und eine Reflexionsschicht 24 an. Nach außen hin, also zu seiner dem Trägerelement 3 abgewandten Seite, wird das zweite Teilelement 2 durch die Klebemittel 25 abgeschlossen. Diese umfassen eine Kaltkleberschicht 25a und eine Ablöseschicht, die insbesondere durch eine Silikonschicht 25b und eine Papierschicht 25c gebildet ist. Durch Abziehen der Papierschicht 25c und der Silikonschicht 25b wird die Kaltkleberschicht 25a freigegeben. Zum Fertigstellen der Vignette kann dann das Trägerelement 3 an der Falzkante 33 gefaltet werden, so dass das erste Teilelement 1 auf dem zweiten Teilelement 2 zu liegen kommt und die Teilelemente 1,2 durch die Kaltkleberschicht 25a verklebt werden, wie später noch im Detail erläutert wird.

Das erste Teilelement 1 ist entlang der Ablöseschicht 34 vom Trägerelement 33 ablösbar. Dies gibt die Kaltkleberschicht 11 frei, die zum Verkleben der fertigen Vignette mit einer Windschutzscheibe eines Fahrzeugs verwendet wird. Die Kaltkleberschicht weist vorzugsweise eine Schichtdicke von 1 bis 40 µm, bevorzugt von 5 bis 25 µm und besonders bevorzugt von 10 bis 20 µm auf. Als Klebematerial eignet sich dabei besonders Kleber basierend auf Acrylaten, Polyester oder Polyolefinen.

Die Polymerschicht 12 ist vorzugsweise eine selbsttragende Folie aus PET (Polyethylenterephthalat) verleiht dem ersten Teilelement 1 Stabilität und stellt eine Oberfläche zum Aufbringen der partiellen optisch variablen Schicht 13 und des Individualisierungsmerkmals 14 zur Verfügung. Die Schichtdicke der Polymerschicht 12 beträgt 6 µm bis 125 µm, bevorzugt von 6 µm bis 75 µm und besonders bevorzugt von 6 µm bis 50 µm. Vorzugsweise ist die Polymerschicht 12 transparent, um eine ungehinderte Sicht auf die optisch variable Schicht 13 und das Individualisierungsmerkmal 14 zu ermöglichen.

Die partielle optisch variable Schicht 13 dient als Sicherheitsmerkmal, welche Fälschungen der Vignette erschwert. Die Schicht 13 kann dabei auch als Schichtsystem aufgebaut sein. Insbesondere kann die partielle optisch variable Schicht 13 mindestens einen Stoff, insbesondere in gelöster Form oder in Partikel- oder Pigmentform mit blickwinkelabhängig unterschiedlichem optischem Effekt und/oder mindestens eine Flüssigkristallschicht mit blickwinkelabhängig unterschiedlichem optischem Effekt und/oder einen Dünnfilm-Schichtstapel mit blickwinkelabhängigem Interferenzfarbeffekt und/oder eine Replizierschicht mit eingeformter Reliefstruktur umfassen. Weiterhin kann sie einen Sicherheitsdruck beinhalten, beispielsweise hochauflösend gedruckte komplexe Linienmuster wie eine oder mehrere Guillochen.

Letztere kann wiederum lichtbeugende und/oder lichtbrechende und/oder lichtstreuende und/oder lichtfokussierende Mikro- oder Nanostrukturen, isotrope oder anisotrope Mattstrukturen, binäre oder kontinuierliche Fresnelllinsen, Mikroprismenstrukturen, Blazegitter mit einer Spatialfrequenz zwischen 100 Linien/mm und 1500 Linien/mm, achromatische Gitterstrukturen mit Spatialfrequenzen zwischen 50 Linien/mm und 300 Linien/mm, Beugungsstrukturen Nullter Ordnung, insbesondere mit einer Spatialfrequenz zwischen 2500 Linien/mm und 4000 Linien/mm, Mikrolinsenfeldern, insbesondere mit einem Durchmesser der Mikrolinsen zwischen 5 µm und 50 µm, sowie Kombinationsstrukturen aus diesen umfassen. Mit solchen Strukturen können optische Effekte geschaffen werden, die nur aus einem bestimmten Blickwinkel sichtbar sind oder sich abhängig vom Blickwinkel verändern. Es ist dabei auch möglich, diese Effekte so zu gestalten, dass sie erst im Zusammenwirken mit dem Individualisierungsmerkmal eine vollständige optische Information darstellen, die wiederum nur blickwinkelabhängig erkennbar ist. Auch dies trägt zu einer erhöhten Fälschungssicherheit bei.

Das Individualisierungsmerkmal 14 kann in der gleichen Schichtebene wie die partielle optisch variable Schicht 13 aufgebracht werden. Dies kann insbesondere unabhängig von der Fertigung der restlichen Bestandteile des Systems 100 erfolgen. Beispielsweise kann das System 100 ohne das Individualisierungsmerkmal 14 gefertigt und an Ausgabestellen für Vignetten geliefert werden. Erwirbt ein Fahrzeugbesitzer eine solche Vignette, so wird das Individualisierungsmerkmal 14 direkt in der Ausgabestelle auf die Polymerschicht 12 aufgebracht, beispielsweise mittels eines Tintenstrahl-, Thermotransfer oder Laserdruckers. Weiterhin ist es möglich, eine Information mittels eines Lasers einzubringen, beispielsweise durch lokales Abtragen (Ablation) einer oder mehrerer Schichten oder eine Schwärzung, Bleichung oder eine andere Farbveränderung einer Schicht. Damit ist es möglich, die Vignette dem Fahrzeugbesitzer unmittelbar zuzuordnen, beispielsweise indem als Individualisierungsmerkmal 14 das Zulassungskennzeichen des zugeordneten Fahrzeugs aufgebracht wird. Auch der Name des Fahrzeugbesitzers, Gültigkeitsdaten der Vignette, oder spezifische Streckenabschnitte, auf denen die Vignette Gültigkeit besitzen soll, können Bestandteil des Individualisierungsmerkmals sein. Nach dem Zusammenfügen der Teilelemente 1, 2, ist das Individualisierungsmerkmal dann zwischen der Polymerschicht 12 des ersten Teilelements 1 und der Kaltkleberschicht 25a des zweiten Teilelements 2 eingeschlossen und somit vor Manipulationen geschützt.

Das zweite Teilelement 2 ist mittels einer Ablöseschicht 21 mit dem Bereich 32 des Trägerelements 3 verbunden. Die Verbindung wird dabei durch eine UV-Kleberschicht 21a vermittelt, die eine Schichtdicke von 0,1 µm bis 10 µm, bevorzugt von 0,1 µm bis 5 µm und besonders bevorzugt von 0,2 µm bis 2,5 µm aufweist. Weiterer Bestandteil der Ablöseschicht 21 ist eine Polymerschicht 21b mit einer Schichtdicke von 6 µm bis 125 µm, bevorzugt von 6 µm bis 75 µm und besonders bevorzugt von 6 µm bis 50 µm. Nach einem Strahlungshärten der UV-Kleberschicht 21a verbindet sich diese fest mit dem Trägerelement 3, die Verbindung zur Polymerschicht 21b bleibt aber lösbar. Beim Abziehen der fertigen Vignette vom Trägerelement 3 verbleibt also die UV-Kleberschicht 21a am Trägerelement 3 und die Polymerschicht 21b an der Vignette und trägt zu deren Stabilität bei.

Die nach außen hin anschließende Haftschicht 22 umfasst eine Haftvermittlerschicht 22a mit einer Schichtdicke von 0,005 µm bis 20 µm, bevorzugt von 0,5 µm bis 5 µm und besonders bevorzugt von 0,5 µm bis 2,5 µm und eine partielle Wachsschicht 22b mit einer Schichtdicke von 0,002 µm bis 1 µm, bevorzugt von 0,005 µm bis 0,2 µm und besonders bevorzugt von 0,005 µm bis 0,1 µm. Durch die partielle Wachsschicht 22b, die den Kontakt der Haftvermittlerschicht 22a zur Polymerschicht 21b bereichsweise unterbindet, wird die Zwischenschichthaftung zwischen der weiter außen gelegenen Replizierschicht 23 und der Polymerschicht 21b abschnittsweise moduliert, d.h. in unterschiedlichen Bereichen herrscht eine unterschiedliche Zwischenschichthaftung. Dies erfüllt eine weitere Sicherheitsfunktion. Wird versucht, eine fertige, bereits an der Windschutzscheibe befestigte Vignette wieder abzulösen, um sie missbräuchlich in einem anderen Transportmittel zu verwenden, so lösen sich zunächst die von der partiellen Wachsschicht 22b bedeckten Bereiche der Replizierschicht 23 von der Polymerschicht 21b ab, während die nicht bedeckten Bereiche durch die Haftvermittlerschicht zusammengehalten werden. Dies führt zu Schäden an den optischen Merkmalen und optischen Effekten der Replizierschicht 23, so dass eine solche Manipulation sofort erkannt werden kann. Als Material für die Haftvermittlerschicht 22a eignet sich dabei insbesondere Acrylate, Polyester, Nitrozellulose und Mischungen davon, während die Wachsschicht 22b vorzugsweise aus Polyolefinen, Zelluloseester oder Zelluloseäther und Mischungen davon besteht.

Die nach außen, also von dem Trägerelement 3 an die Haftschicht anschließende Replizierschicht 23 besitzt eine Schichtdicke von 0,2 µm bis 20 µm, bevorzugt von 0,5 µm bis 5 µm und besonders bevorzugt von 0,5 µm bis 2,5 µm und weist zumindest eine Reliefstruktur auf, die beispielsweise mittels einer Prägewalze in die Replizierschicht 23 eingebracht werden kann. Bei der Reliefstruktur kann es sich um eine ein- oder zweidimensionale diffraktive Gitterstruktur handeln. Diese besitzt vorzugsweise eine Spatialfrequenz zwischen 100 Linien/mm und 2500 Linien/mm, bevorzugt zwischen 1000 Linien/mm und 2000 Linien/mm. Um bestimmte optische Effekte zu erzielen, kann die Reliefstruktur lichtbeugende und/oder lichtbrechende und/oder lichtstreuende und/oder lichtfokussierende Mikro- oder Nanostrukturen, isotrope oder anisotrope Mattstrukturen, binäre oder kontinuierliche Fresnelllinsen, Mikroprismenstrukturen, Blazegitter mit einer Spatialfrequenz zwischen 100 Linien/mm und 300 Linien/mm, Beugungsstrukturen nullter Ordnung, insbesondere mit einer Spatialfrequenz zwischen 2500 Linien/mm und 4000 Linien/mm, Mikrolinsenfeldern, insbesondere mit einem Durchmesser der Mikrolinsen zwischen 5 µm und 50 µm, und Kombinationsstrukturen aus diesen aufweisen. Solche Strukturen dienen aufgrund der hohen, für ihre Herstellung notwendigen Präzision als Sicherheitselemente, die nur schwer zu fälschen sind.

Der optische Effekt der Replizierschicht 23 entsteht insbesondere im Zusammenspiel mit der nach außen hin anschließenden Reflexionsschicht 24. Diese weist eine Schichtdicke von 0,005 bis 2 µm, bevorzugt von 0,01 bis 0,2 µm und besonders bevorzugt von 0,02 bis 0,1 µm auf. Als Material für die Reflexionsschicht eignen sich Metalle wie Aluminium, Silber, Kupfer, Chrom oder Gold, sowie HRI-Materialien ((HRI = High Refractive Index), also Materialien mit hohem Brechungsindex, wie beispielsweise Titandioxid, oder Zinksulfid. Auch Kombinationen dieser Materialien sind verwendbar. Besondere optische Effekte sind erzielbar, wenn die Reflexionsschicht 24 nicht durchgängig ist, sondern musterförmig aufgetragen ist. Solche Muster können sich beispielsweise mit den Strukturen der Replizierschicht 23 ergänzen und in ihrer Gesamtheit das gewünschte Bild ergeben. Auch mehrere Muster aus unterschiedlichen Materialien können in der Reflexionsschicht 24 ausgebildet sein. Gerade mehrere, sich ergänzende Muster innerhalb der Reflexionsschicht 24 oder zwischen der Reflexionsschicht 24 und der Replizierschicht 23 erhöhen aufgrund der zur Herstellung notwendigen Registergenauigkeit die Fälschungssicherheit der Vignette beträchtlich.

Auf seiner dem Trägerelement 3 abgewandten Seite wird das zweite Teilelement 2 durch Klebemittel 25 abgeschlossen. Diese umfassen eine Kaltkleberschicht 25a, die auf der Reflexionsschicht 24 aufliegt. Nach außen hin ist die Kaltkleberschicht 25a durch eine Papierschicht 25c geschützt, die aufgrund einer zwischenliegenden Silikonschicht 25b von der Kaltkleberschicht 25a abziehbar ist.

Die Kaltkleberschicht 25a besteht bevorzugt aus Acrylaten und weist eine Schichtdicke von 1 µm bis 40 µm, bevorzugt von 5 µm bis 25 µm und besonders bevorzugt von 10 µm bis 20 µm auf. Die Papierschicht 25c besitzt eine Schichtdicke von 30 µm bis 300 µm, bevorzugt von 40 µm bis 160 µm und besonders bevorzugt von 60 µm bis 120 µm und steht seitlich vorzugsweise über die Kaltkleberschicht 25a über, so dass eine Lasche zum einfachen Abziehen der Papierschicht 25c gebildet wird. Alternativ kann auch eine Stanzung in der Papierschicht 25c vorgesehen sein, damit sich durch Biegen des Trägers die Papierschicht an der Stanzung trennt und einfach abgezogen werden kann. Nach dem Abziehen der Papierschicht 25c, wobei die Silikonschicht 25b an der Papierschicht 25c verbleibt, liegt die Kaltkleberschicht 25a frei, so dass durch Falten des Trägerelements an der Falzkante 33 die beiden Teilelemente 1, 2 in Überdeckung gebracht und verklebt werden können. Vorzugsweise ist das zweite Teilelement dabei größer als das erste, so dass ein vorzugsweise allseitig überstehender Rand der Kaltkleberschicht 25a verbleibt. Beim Aufkleben der fertigen Vignette auf die Windschutzscheibe wird dann das erste Teilelement 1 mittels der Kaltkleberschicht 11 mit der Windschutzscheibe verbunden, während der überstehende Rand der Kaltkleberschicht 25a das zweite Teilelement 2 ebenfalls mit der Windschutzscheibe verbindet, so dass ein besonders guter Halt erzielt wird.

Das Trägerelement 3 besteht vorzugsweise ebenfalls aus Polyester, insbesondere aus einer selbsttragenden Folie aus PET (Polyethylenterephthalat) und ist insbesondere transparent, transluzent oder opak mit einer Schichtdicke von 25 µm bis 250 µm, bevorzugt von 50 µm bis 150 µm und besonders bevorzugt von 50 µm bis 120 µm. Dies ermöglicht ein Belichten der UV-Kleberschicht 21a durch das Trägerelement 3 hindurch, um den UV-Kleber auszuhärten.

Im Folgenden werden weitere Ausführungsformen des beschriebenen Systems 100 beschrieben. Gleiche Bestandteile sind dabei mit gleichen Bezugszeichen beschriftet und weisen die bereits anhand des Systems 100 beschriebenen Eigenschaften und Funktionen auf.

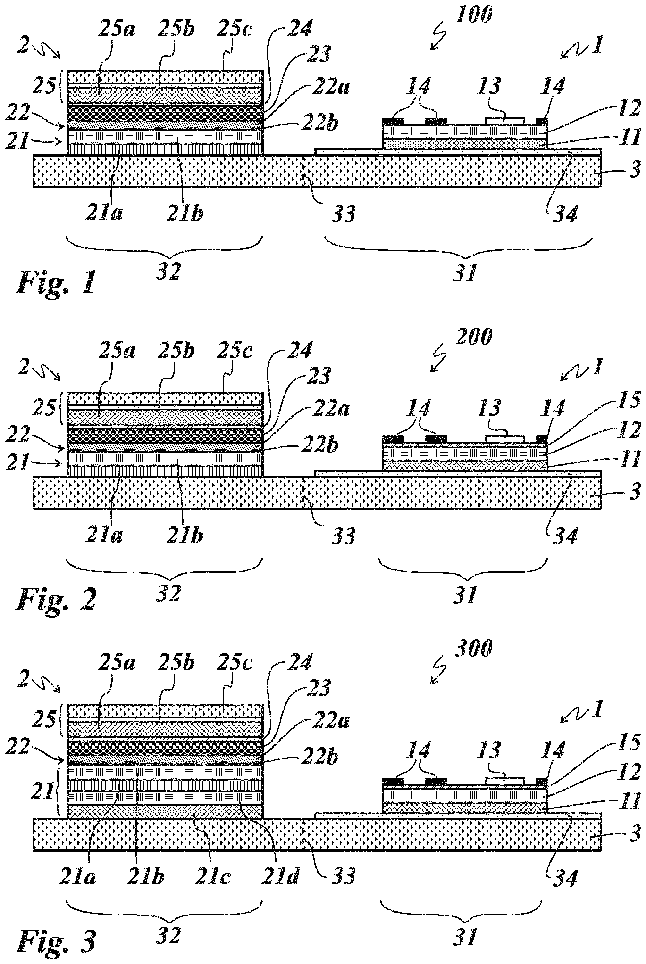

Fig. 2 zeigt ein alternatives System 200 zur Herstellung einer individualisierten Vignette. Das System 200 entspricht in allen Komponenten dem System 100 und weist lediglich eine zusätzliche Lackschicht 15 auf, die zwischen der Polymerschicht 12 und der partiellen optisch variablen Schicht 13 sowie dem Individualisierungsmerkmal 14 des ersten Teilelements 1 angeordnet ist. Diese Lackschicht verbessert die Haftung des Individualisierungsmerkmals 14 bzw. der partiellen optisch variablen Schicht 13. Als Material für den Lack eignet sich insbesondere PVC (Polyvinylchlorid).

Das in Fig. 3 dargestellte alternative System 300 umfasst wie auch das System 200 eine Lackschicht 15 zur Haftverbesserung des Individualisierungsmerkmals 14. Zusätzlich unterscheidet es sich vom System 200 im Aufbau der Ablöseschicht 21 und des Trägerelements 3.

In diesem Ausführungsbeispiel besteht das Trägerelement 3 aus Papier mit einer Schichtdicke von 30 bis 300 µm, bevorzugt von 40 bis 160 µm und besonders bevorzugt von 60 bis 120 µm. Eine Belichtung der UV-Kleberschicht 21a durch das Trägerelement 3 hindurch ist hier also nicht möglich, die Belichtung muss von der anderen Seite des zweiten Teilelements 2 erfolgen. Diese Ausführungsform ist daher nur möglich, wenn die weiteren Schichten des zweiten Teilelements 2 eine hinreichende Transmissivität für UV-Strahlung der zur Belichtung der UV-Kleberschicht 21a notwendigen Wellenlänge besitzen.

Um eine zuverlässige Ablösung des zweiten Teilelements 2 von dem Trägerelement 3 zu ermöglichen, ist die Ablöseschicht 21 in diesem Ausführungsbeispiel modifiziert. Die Ablöseschicht umfasst nun eine Kaltkleberschicht 21c, mit der das zweite Teilelement 2 fest auf dem Trägerelement 3 befestigt ist. Nach außen hin schließt sich an diese eine weitere Polymerschicht 21d an, auf die dann der bereits beschriebene Schichtaufbau aus einer UV-Kleberschicht 21a und einer Polymerschicht 21b folgt. Beim Ablösen des zweiten Teilelements 2 vom Trägerelement löst sich die Verbindung zwischen der UV-Kleberschicht 21a und der Polymerschicht 21b. Lediglich die Polymerschicht 21b verbleibt, wie auch bei den bereits beschriebenen Ausführungsbeispielen, am zweiten Teilelement 2. Die UV-Kleberschicht 21a, die weitere Polymerschicht 21d und die Kaltkleberschicht 21c verbleiben am Trägerelement.

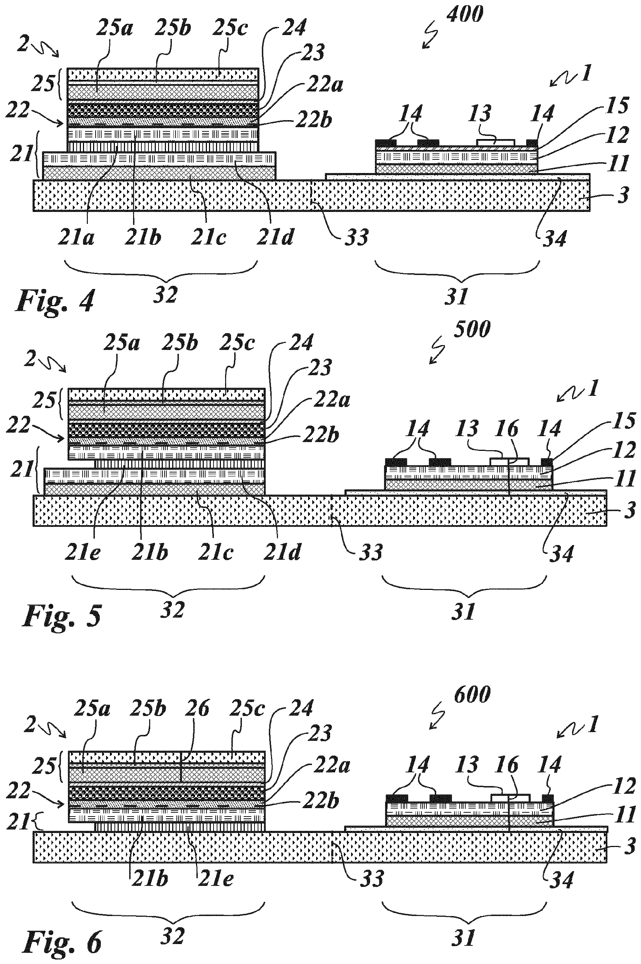

Das in Fig. 4 gezeigte System 400 entspricht wieder dem System 300. Es unterscheidet sich lediglich dadurch, dass die Kaltkleberschicht 21d und die weitere Polymerschicht 21d der Ablöseschicht 21 des zweiten Teilelements eine größere Flächenausdehnung besitzen, als dessen restliche Schichten. Dies erleichtert die Ablösung und führt zu keiner Veränderung an der fertigen Vignette, da die breiteren Schichten 21c und 21d wie beschrieben am Trägerelement 3 verbleiben.

Das System 500 gemäß Fig. 5 ist von dem System 300 gemäß Fig. 3 abgeleitet. Anstelle einer UV-Kleberschicht 21a ist dabei im zweiten Teilelement eine reversibel lösbare Kleberschicht 21e vorgesehen, die keine Strahlungshärtung benötigt und beispielsweise einfach aufgedruckt werden kann. Als Klebstoff eignen sich dabei insbesondere Formulierungen auf Basis von Polyvinylalkohol. Die Schichtdicke der Kleberschicht 21e beträgt dabei 1 bis 40 µm, bevorzugt 5 bis 25 µm und besonders bevorzugt 10 bis 20 µm. Da das Trägerelement 3 auch hier aus Papier besteht, ist eine Belichtung durch das Trägerelement 3 hindurch nicht möglich. Die Verwendung des reversibel lösbaren Klebers für die Kleberschicht 21e ermöglicht die Verwendung des Systems 500 nun auch, wenn auch von der Oberseite des zweiten Teilelements 2 keine Belichtung möglich ist. Wie auch im System 300 verbleibt beim Ablösen des zweiten Teilelements nur die Polymerschicht 21 b am zweiten Teilelement 2, während die Kleberschicht 21e, die weitere Polymerschicht 21d und die Kaltkleberschicht 21c am Trägerelement verbleiben.

Die reversibel lösbare Kleberschicht 21e muss sich dabei nicht über die ganze Breite des zweiten Teilelements erstrecken. Wenn, wie in der Figur ersichtlich, ein leichter Überstand verbleibt, wird das Ablösen erleichtert.

Ferner kann das System 500 noch Schnitte 16, 26 im ersten 1 und/oder zweiten Teilelement 2 umfassen, die sich durch mindestens eine Schicht des jeweiligen Teilelements 1,2 erstrecken. Dies trägt zur Zerstörung der Sicherheitsmerkmale beim missbräuchlichen Ablösen einer bereits angebrachten Vignette bei.

Eine Lackschicht 15 ist hier nicht vorgesehen, kann jedoch auch verwendet werden.

Weiterhin ist es möglich, die Oberfläche der Polymerschichten derart zu modifizieren, dass üblicherweise auf Polyester gut haftende Klebersysteme, wie beispielsweise Kaltkleber, wieder ablösbar sind. Dies kann beispielsweise mittels einer Silikonisierung erfolgen oder mit einer dünnen Ablöseschicht, die mittels eines wachsbasierten Systems angebunden ist.

Das System 600 gemäß Fig. 6 entspricht dem System 500. Der einzige Unterschied besteht darin, dass auf die Kaltkleberschicht 21c und die weitere Polymerschicht 21d in der Ablöseschicht 21 des zweiten Teilelements 2 verzichtet wurde. Dies ist möglich, da die hier verwendete reversibel lösbare Kleberschicht 21e im Gegensatz zur UV-Kleberschicht 21a auch problemlos auf dem Papier des Trägerelements 3 aufgebracht werden kann. Weitere Unterschiede zum System 500 bestehen nicht.

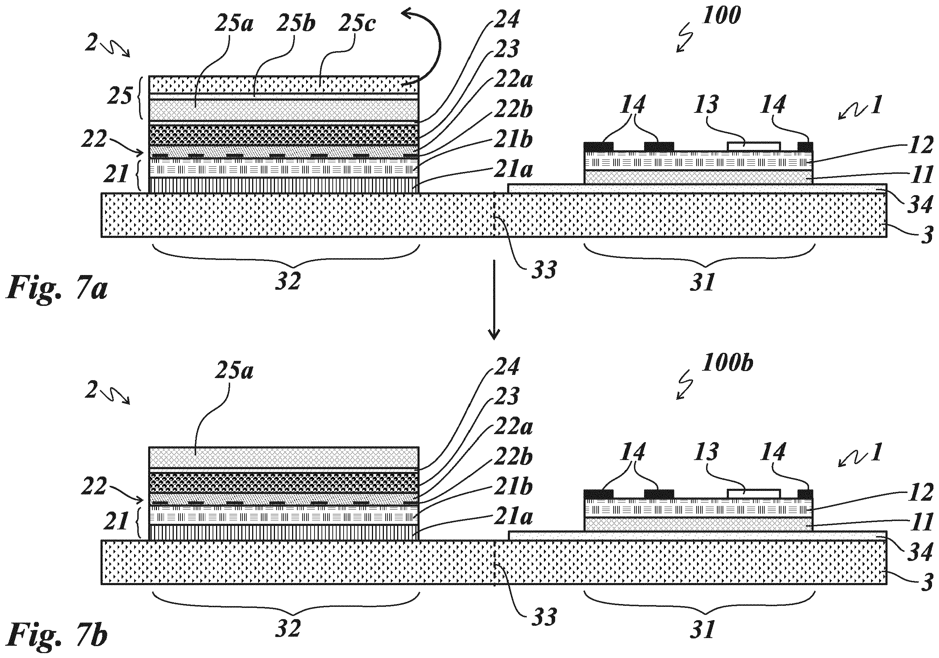

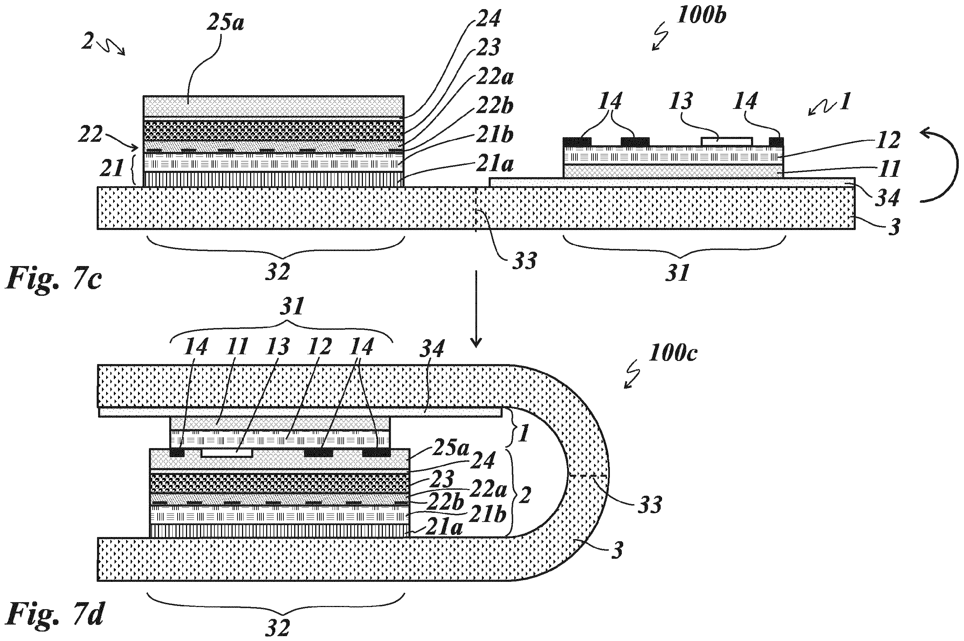

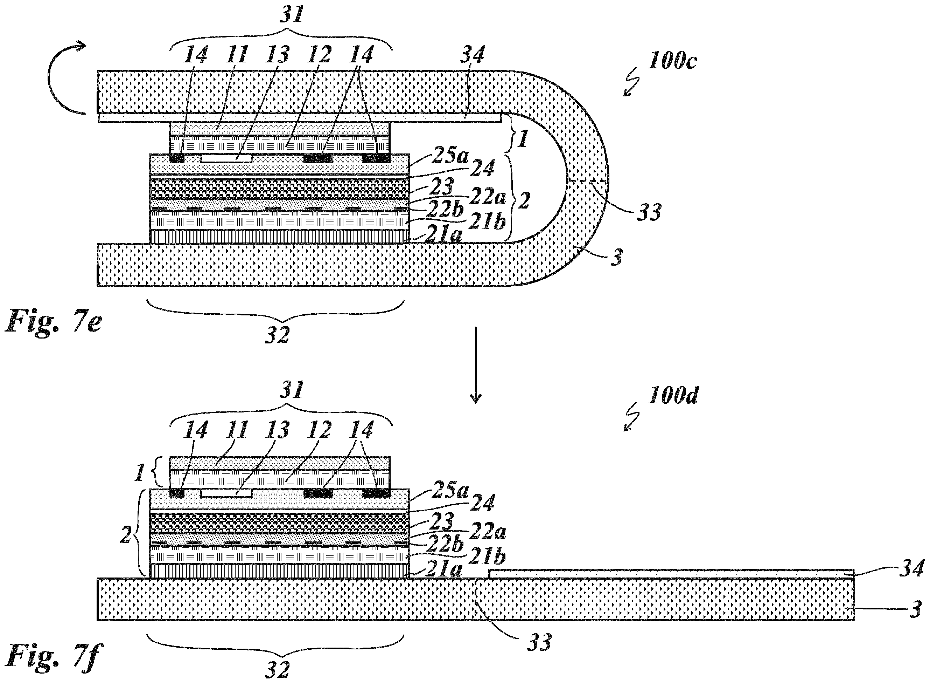

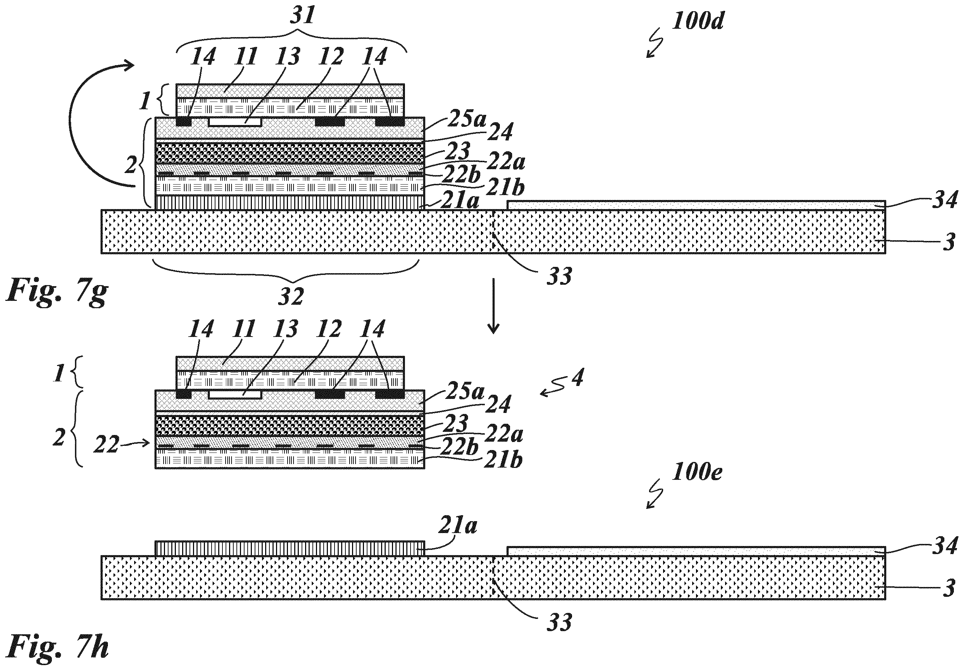

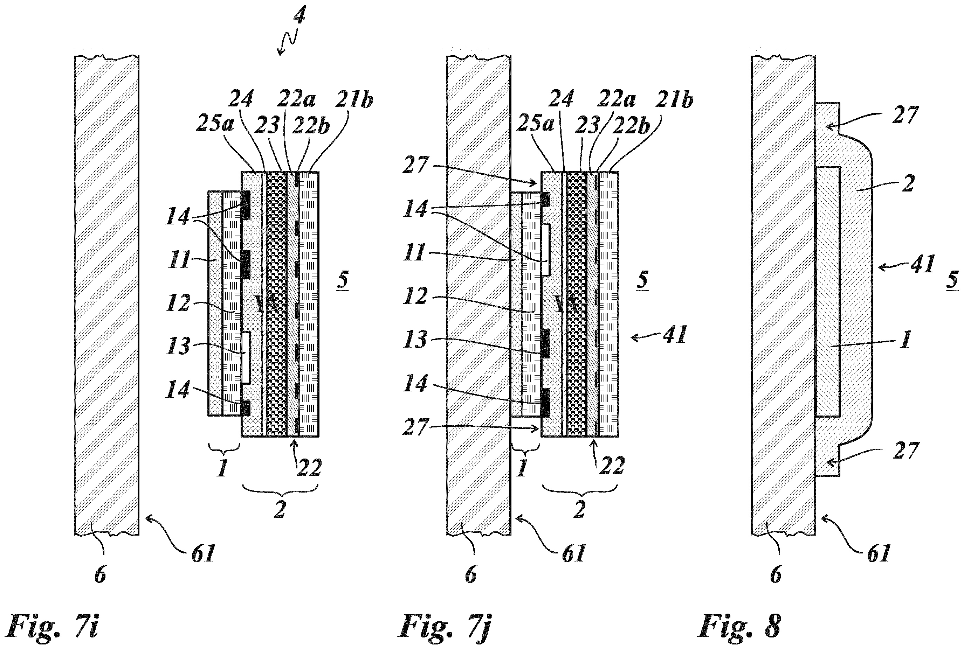

In Fig. 7 sind die Herstellungsschritte einer vollständigen individualisierten Vignette ausgehend von einem System 100 gemäß Fig. 1 dargestellt. Wie Fig. 7a zeigt, wird zunächst das System 100 bereitgestellt und auf die beschriebene Weise mit dem Individualisierungsmerkmal 14 bedruckt. Anschließend wird die Papierschicht 25c der Klebemittel 25 des zweiten Teilelements 2 gemeinsam mit der Silikonschicht 25b in Pfeilrichtung abgezogen.

Man erhält so das in Fig. 7b gezeigte Zwischenprodukt 100b, bei dem die Kaltkleberschicht 25a der Klebemittel 25 des zweiten Teilelements 2 freiliegt. Wie in Fig. 7c dargestellt, wird das Trägerelement 3 des Zwischenprodukts 100b nun über die Falzkante 33 in Pfeilrichtung gefalzt. Dabei entsteht das in Fig. 7d gezeigte Zwischenprodukt. Polymerschicht 12, partielle optisch variable Schicht 13 und Individualisierungsmerkmal 14 des ersten Teilelements 1 liegen nun auf der Kaltkleberschicht 25a des zweiten Teilelements auf, so dass die Teilelemente 1, 2 verklebt werden. Das Individualisierungsmerkmal 14 ist nun manipulationssicher zwischen der Polymerschicht 12 und der Kaltkleberschicht 25a eingeschlossen.

Wie in Fig. 7e gezeigt, wird nun das Trägerelement 3 zunächst im Bereich 31 von dem Verbund der Teilelemente 1 und 2 in Pfeilrichtung abgezogen. Die Ablöseschicht 34 erleichtert die Ablösung und verbleibt am Trägerelement 3. Zudem verhindert die Ablöseschicht 34 ein unerwünschtes Verkleben der Kaltkleberschicht 25a des zweiten Teilelements 2 mit dem Trägerelement 3. Hierdurch wird die Kaltkleberschicht 11 des ersten Teilelements 1 freigelegt und man erhält das Zwischenprodukt 100d, das in Fig. 7f gezeigt ist. Bei diesem Zwischenprodukt 100d ist der Verbund der Teilelemente 1 und 2 nur noch im Bereich 32 über die UV-Kleberschicht 21a der Ablöseschicht 21 des zweiten Teilelements 2 mit dem Trägerelement 3 verbunden. Das Trägerelement 3 wird dabei in die flache Lage zurückgefaltet.

Schließlich wird, wie in Fig. 7g dargestellt, auch das zweite Teilelement 2 im Bereich 32 vom Trägerelement 3 gelöst, indem der Verbund aus den Teilelementen 1 und 2 in Pfeilrichtung vom Trägerelement 3 abgezogen wird. Dabei trennt sich die UV-Kleberschicht 21a der Ablöseschicht 21 des zweiten Teilelements 2 von der Polymerschicht 21b der Ablöseschicht 21. Man erhält somit, wie in Fig. 7h gezeigt, zum einen die fertige, individualisierte Vignette 4, sowie das zurückbleibende Trägerelement 100f mit der noch anhaftenden UV-Kleberschicht 21a und Ablöseschicht 34.

Die fertige Vignette 4, die in Fig. 7i nochmals separat dargestellt ist, umfasst nun die Kaltkleberschicht 11, die Polymerschicht 12, die partielle optisch variable Schicht 13, das Individualisierungsmerkmal 14, die Kaltkleberschicht 25a, die Reflexionsschicht 24, die Replizierschicht 23, die Haftschicht 22 und die Polymerschicht 21b.

Schließlich muss die Vignette 4 noch auf die einem Fahrzeuginnenraum 5 zugewandte Seite 61 einer Windschutzscheibe 6 aufgeklebt werden. Dies erfolgt zunächst mittels der Kaltkleberschicht 11 des ersten Teilelements 1. Wie in Fig. 7j zu erkennen, steht das zweite Teilelement 2 in einem Randbereich 27 über das erste Teilelement 1 über. In diesem Randbereich liegt die Kaltkleberschicht 25a des zweiten Teilelements 2 frei. Auch dieser Randbereich kann nun mit der Windschutzscheibe 6 verklebt werden, so dass sich schließlich die in Fig. 8 schematisch gezeigte fertig angebrachte individualisierte Vignette 4 auf der Windschutzscheibe 6 ergibt. Die Polymerschicht 21b bildet nun die von der Windschutzscheibe abgewandte Oberfläche 41 der Vignette und schützt diese vor Umwelteinflüssen.

Obwohl das Verfahren zum Fertigstellen und Anbringen der Vignette 4 nur anhand des Systems 100 beschrieben wurde, kann das vorstehend erläuterte Verfahren selbstverständlich auch Anwendung für die Systeme 200 bis 500 und aller weiteren beschriebenen und von den Ansprüchen umfassten Varianten finden.

### Bezugszeichenliste

- 1: erstes Teilelement
- 2: zweites Teilelement
- 3: Trägerelement
- 4: Vignette
- 5: Fahrzeuginnenraum
- 6: Windschutzscheibe
- 11: Kaltkleberschicht
- 12: Polymerschicht (Teilelement 1)
- 13: optisch variable Schicht
- 14: Individualisierungsmerkmal
- 15: Lackschicht
- 16: Schnitt
- 21: Ablöseschicht
- 21a: UV-Kleberschicht
- 21b: Polymerschicht (Teilelement 2)
- 21c: Kaltkleberschicht
- 21d: Polymerschicht (Teilelement 2)
- 21e: reversibel lösbare Kleberschicht
- 22: Haftschicht
- 22a: Haftvermittlerschicht
- 22b: partielle Wachsschicht
- 23: Replizierschicht
- 24: Reflexionsschicht
- 25: Klebemittel
- 25a: Kaltkleberschicht
- 25b: Silikonschicht
- 25c: Papierschicht
- 26: Schnitt
- 27: Randbereich
- 31: erster Teilbereich (des Trägerelements)
- 32: zweiter Teilbereich (des Trägerelements)
- 33: Falzkante
- 34: Ablöseschicht
- 41: Oberfläche (der Vignette)
- 61: Innenseite (der Windschutzscheibe)

## Patentansprüche

1. System (100, 200, 300, 400, 500, 600) zum Herstellen eines Sicherheitselements (4) in Form einer Vignette zum Verkleben mit einem Zielsubstrat, für eine Oberfläche, insbesondere eine Sichtscheibe (6) eines Transportmittels, umfassend ein Trägerelement (3) mit einer ersten und einer zweiten Oberfläche, wobei in einem ersten Bereich (31) der ersten Oberfläche ein erstes Teilelement (1) des Sicherheitselements (4) und in einem zweiten, durch eine Falzkante (33) vom ersten Bereich (31) getrennten Bereich (32) der ersten Oberfläche ein zweites Teilelement (2) des Sicherheitselements (4) angeordnet ist, welches durch Falzen des Trägerelements (3) entlang der Falzkante (33) in Überdeckung mit dem ersten Teilelement (1) bringbar ist, wobei das zweite Teilelement (2) ein Klebemittel (25) aufweist, welches auf der dem Trägerelement (3) abgewandten Seite des zweiten Teilelements (2) angeordnet ist, und wobei auf einer dem Trägerelement (3) abgewandten Seite des ersten Teilelements (1) und/oder zweiten Teilelements (2) ein Individualisierungsmerkmal (14) anbringbar ist, wobei das zweite Teilelement (2) in allen in der Erstreckungsebene des Trägerelements (3) gelegenen Richtungen eine größere Erstreckungsbreite aufweist als das erste Teilelement (1).

2. System (100, 200, 300, 400, 500, 600) nach Anspruch 1,
**dadurch gekennzeichnet,**
**dass** das erste (1) und/oder zweite Teilelement (2) zumindest eine Replizierschicht (23) umfasst, in welche zumindest eine Reliefstruktur eingeformt ist, wobei die Replizierschicht (3) bevorzugt eine Schichtdicke von 0,2 bis 20 µm, bevorzugt von 0,5 bis 5 µm und besonders bevorzugt von 0,5 bis 2,5 µm aufweist, und die wenigstens eine Reliefstruktur vorzugsweise als insbesondere ein- oder zweidimensionale diffraktive Gitterstruktur ausgebildet ist, insbesondere mit einer Spatialfrequenz zwischen 100 Linien/mm und 2500 Linien/mm, bevorzugt zwischen 1000 Linien/mm und 2000 Linien/mm.

3. System (100, 200, 300, 400, 500, 600) nach einem der Ansprüche 1 oder 2,
**dadurch gekennzeichnet,**
**dass** das erste (1) und/oder zweite Teilelement (2) zumindest eine Reflexionsschicht (24), insbesondere eine Metallschicht oder eine HRI-Schicht aufweist, welche vorzugsweise musterförmig, insbesondere in Form einer ersten optischen Information ausgeformt ist.

4. System (100, 200, 300, 400, 500, 600) nach einem der Ansprüche 1 bis 3,
**dadurch gekennzeichnet,**
**dass** das erste (1) und/oder zweite Teilelement (2) zumindest eine partielle optisch variable Schicht (13) und/oder Schichtsystem umfasst, welche vorzugsweise derart ausgebildet wird, dass diese mindestens einen Stoff mit blickwinkelabhängig unterschiedlichem optischem Effekt enthält und/oder mindestens eine Flüssigkristallschicht mit blickwinkelabhängig unterschiedlichem optischem Effekt und/oder einen Dünnfilm-Schichtstapel mit blickwinkelabhängigem Interferenzfarbeffekt und/oder eine Replizierschicht (23) mit eingeformter Reliefstruktur umfasst, welche insbesondere nach einem der Ansprüche 2 oder 3 ausgebildet ist.

5. System (100, 200, 300, 400, 500, 600) nach einem der Ansprüche 1 bis 4,
**dadurch gekennzeichnet,**
**dass** das erste Teilelement (1) eine erste Kleberschicht (11), insbesondere zum Verkleben des Sicherheitselements (4) mit der Windschutzscheibe (6) des Transportmittels umfasst, und dass die erste Kleberschicht (11) auf der dem Trägerelement (3) zugewandten Seite des ersten Teilelements (1) angeordnet ist, welche bevorzugt eine Kaltkleberschicht, insbesondere mit einer Schichtdicke von 1 bis 40 µm, bevorzugt von 5 bis 25 µm und besonders bevorzugt von 10 bis 20 µm ist.

6. System (100, 200, 300, 400, 500, 600) nach einem der Ansprüche 1 bis 5,
**dadurch gekennzeichnet,**
**dass** die Klebemittel (25) zum Verkleben des ersten und zweiten Teilelements eine zweite Kleberschicht (25a), insbesondere eine Kaltkleberschicht, umfassen, wobei die Klebemittel (25) bevorzugt eine Ablöseschicht (25b, 25c), insbesondere eine ablösbare, silikonisierte Papierschicht umfassen, die auf der dem Trägerelement (3) abgewandten Seite auf die zweite Kleberschicht (25a) aufgebracht ist, und welche insbesondere die darunter liegende zweite Kleberschicht (25a) mindestens bereichsweise überragt.

7. System (100, 200, 300, 400, 500, 600) nach Anspruch 6,
**dadurch gekennzeichnet,**
**dass** sich die Ablöseschicht (21) in der Flächenebene des Trägerelements in zumindest einer Richtung über zumindest eine weitere Schicht des zweiten Teilelements (2) hinaus erstreckt.

8. System (100, 200, 300, 400, 500, 600) nach einem der Ansprüche 6 oder 7,
**dadurch gekennzeichnet,**
**dass** das zweite Teilelement (2) zumindest eine Haftschicht (22) aufweist, die bereichsweise unterschiedliche Hafteigenschaften zu den angrenzenden Schichten (21, 23) besitzt und insbesondere an den Stellen, an denen sie vorgesehen ist, die Haftung der angrenzenden Schichten (21, 23) erhöht oder verringert.

9. System (100, 200, 300, 400, 500, 600) nach Anspruch 8,
**dadurch gekennzeichnet,**
**dass** die Haftschicht (22) eine partielle Wachsschicht (22b) oder eine partielle Kleberschicht umfasst.

10. System(100, 200, 300, 400, 500, 600) nach einem der Ansprüche 1 bis 9,
**dadurch gekennzeichnet,**
**dass** das erste (1) und/oder das zweite Teilelement (2) einen Schnitt (16, 26) aufweist, welcher sich von einer dem Trägerelement (3) abgewandten Oberfläche des jeweiligen Teilelements (1, 2) senkrecht zur Erstreckungsebene der Trägerschicht (3) durch zumindest eine Schicht des jeweiligen Teilelements (1,2) erstreckt.

11. Verfahren zum Individualisieren eines Sicherheitselements (4)in Form einer Vignette zum Verkleben mit einem Zielsubstrat, für eine Windschutzscheibe (6) eines Fahrzeugs, mit den Schritten:
a) Bereitstellen eines Systems (100, 200, 300, 400, 500, 600) nach einem der Ansprüche 1 bis 10;
b) Anbringen eines Individualisierungsmerkmals (14) auf einer dem Trägerelement (3) abgewandten Seite des ersten (1) und/oder zweiten Teilelements (2);
c) Falzen des Trägerelements (3) entlang der Falzkante (33), wobei die Teilelemente (1, 2) so in Überdeckung miteinander gebracht werden, dass das zweite Teilelement (2) allseitig über das erste Teilelement (1) hinausragt.
d) Verkleben der Teilelemente (1, 2) mittels des auf der dem Trägerelement (3) abgewandten Seite des zweiten Teilelements (2) angeordneten Klebemittels (25).

12. Verfahren nach Anspruch 11,
**dadurch gekennzeichnet,**
**dass** das Individualisierungsmerkmal (14) durch Drucken aufgebracht wird, wobei als Individualisierungsmerkmal (14) bevorzugt eine Seriennummer, ein Name, ein Kraftfahrzeugkennzeichen oder dgl. aufgebracht wird.

13. Verfahren nach einem der Ansprüche 11 oder 12,
**dadurch gekennzeichnet,**
**dass** vor dem Falzen in Schritt c) eine Ablöseschicht (25b, 25c), insbesondere eine ablösbare, silikonisierte Papierschicht von einer dem Trägerelement (3) abgewandten Oberfläche des zweiten Teilelements (2) abgelöst und so eine zweite Kleberschicht (25a) des die Ablöseschicht (25b, 25c) und die zweite Kleberschicht (25a) umfassenden Klebemittels (25) zum Verkleben in Schritt d) freigelegt wird.

14. Verfahren nach einem der Ansprüche 11 bis 13,
**dadurch gekennzeichnet,**
**dass** in einem weiteren Schritt e) das Trägerelement (3) von den verklebten Teilelementen (1, 2) abgelöst wird, wobei das Trägerelement (3) bevorzugt entlang einer Ablöseschicht (34), insbesondere einer Silikonschicht, vom ersten Teilelement (1) abgelöst wird, wobei eine Kleberschicht (11) des ersten Teilelements freigegeben wird, mittels welcher das Sicherheitselement (4) mit einer Oberfläche, insbesondere einer Windschutzscheibe (6) eines Fahrzeugs, verklebbar ist.

15. Sicherheitselement (4) in Form einer Vignette für einen Fahrzeug, erhältlich mittels eines Verfahrens nach einem der Ansprüche 11 bis 14, welches bevorzugt mit einer Windschutzscheibe (6) eines Fahrzeugs verklebt ist.

## Claims

1. System (100, 200, 300, 400, 500, 600) for manufacturing a security element (4) in the form of a vignette for adhering to a target substrate, for a surface, in particular a viewing panel (6) of a means of transport, comprising a support element (3) with a first and a second surface, wherein, in a first region (31) of the first surface, a first sub-element (1) of the security element (4), and in a second region (32) of the first surface, said region being separated from the first region (31) by a fold edge (33), a second sub-element (2) of the security element (4) is arranged, which can be brought to overlap with the first sub-element (1) by folding the support element (3) along the fold edge (33), wherein the second sub-element (2) has an adhesive (25) which is arranged on the side of the second sub-element (2) facing away from the support element (3), and wherein an personalisation feature (14) is attachable to a side of the first sub-element (1) and/or second sub-element (2) facing away from the support element (3), wherein the second sub-element (2) has a larger extension width than the first sub-element (1) in all directions located in the plane of extension of the support element (3).

2. System (100, 200, 300, 400, 500, 600) according to claim 1,
**characterised in that**
the first (1) and/or second sub-element (2) comprises at least one replication layer (23), into which at least one relief structure is moulded, wherein the replication layer (3) preferably has a layer thickness of from 0.2 to 20µm, preferably of from 0.5 to 5µm and most preferably of from 0.5 to 2.5µm, and the at least one relief structure is preferably formed as an in particular one- or two-dimensional diffractive lattice structure, in particular having a spatial frequency of between 100 lines/mm and 2500 lines/mm, preferably between 1000 lines/mm and 2000 lines/mm.

3. System (100, 200, 300, 400, 500, 600) according to one of claims 1 or 2,
**characterised in that**
the first (1) and/or second sub-element (2) has at least one reflective layer (24), in particular a metal layer or an HRI layer, which is preferably formed to be patterned, in particular in the form of a first optical piece of information.

4. System (100, 200, 300, 400, 500, 600) according to one of claims 1 to 3,
**characterised in that**
the first (1) and/or second sub-element (2) comprises at least one partially optically variable layer (13) and/or layer system, which is preferably designed in such a way that this includes at least one material with an optical effect which varies depending on the viewing angle and/or comprises at least one liquid crystal layer with an optical effect which varies depending on the viewing angle and/or a thin film layer stack with an interference colour effect depending on the viewing angle and/or a replication layer (23) with a moulded relief structure, which is in particular designed according to one of claims 2 or 3.

5. System (100, 200, 300, 400, 500, 600) according to one of claims 1 to 4,
**characterised in that**
the first sub-element (1) comprises a first adhesive layer (11), in particular for adhering the security element (4) to the windscreen (6) of the means of transport, and the first adhesive layer (11) is arranged on the side of the first sub-element (1) facing the support element (3), which is preferably a cold adhesive layer, in particular with a layer thickness of from 1 to 40µm, preferably of from 5 to 25µm and particularly preferably of from 10 to 20µm.

6. System (100, 200, 300, 400, 500, 600) according to one of claims 1 to 5,
**characterised in that**
the adhesives (25) for adhering the first and second sub-element comprise a second adhesive layer (25a), in particular a cold adhesive layer, wherein the adhesives (25) preferably comprise a release layer (25b, 25c), in particular a detachable, siliconised paper layer, which is applied to the second adhesive layer (25a) on the side facing away from the support element (3), and which in particular projects beyond the underlying second adhesive layer (25a) at least in regions.

7. System (100, 200, 300, 400, 500, 600) according to claim 6,
**characterised in that**
the release layer (21) extends in the flat plane of the support element in at least one direction over at least one further layer of the second sub-element (2).

8. System (100, 200, 300, 400, 500, 600) according to one of claims 6 or 7,
**characterised in that**
the second sub-element (2) has at least one bonding layer (22) which, in regions, has different bonding properties to the adjacent layers (21, 23) and, in particular at the points at which it is provided, increases or decreases the bonding of the adjacent layers (21, 23).

9. System (100, 200, 300, 400, 500, 600) according to claim 8,
**characterised in that**
the bonding layer (22) comprises a partial wax layer (22b) or a partial adhesive layer.

10. System (100, 200, 300, 400, 500, 600) according to one of claims 1 to 9,
**characterised in that**
the first (1) and/or the second sub-element (2) has a section (16, 26) which extends from a surface of the respective sub-element (1, 2) facing away from the support element (3) perpendicularly to the plane of extension of the support layer (3) through at least one layer of the respective sub-element (1, 2).

11. Method for personalising a security element (4) in the form of a vignette for adhering to a target substrate, for a windscreen (6) of a vehicle, with the steps:
a) providing a system (100, 200, 300, 400, 500, 600) according to one of claims 1 to 10;
b) applying an personalisation feature (14) on a side of the first (1) and/or second sub-element (2) facing away from the support element (3);
c) folding the support element (3) along the folding edge (33), wherein the sub-elements (1, 2) are brought into overlap with each other in such a way that the second sub-element (2) projects beyond the first sub-element (1) on all sides.
d) adhesion of the sub-elements (1,2) by means of the adhesive (25) arranged on the side of the second sub-element (2) facing away from the support element (3).

12. Method according to claim 11,
**characterised in that**
the personalisation feature (14) is applied by means of printing, wherein preferably a serial number, a name, a motor vehicle registration number or similar is applied as an personalisation feature (14).

13. Method according to one of claims 11 or 12,
**characterised in that**
before folding in step c), a release layer (25b, 25c), in particular a detachable, siliconised paper layer, is released from a surface of the second sub-element (2) which faces away from the support element (3), and a second adhesive layer (25a) of the adhesive (25) comprising the release layer (25b, 25c) and the second adhesive layer (25a) is thereby exposed for adhesion in step d).

14. Method according to one of claims 11 to 13,
**characterised in that**,
in a further step e), the support element (3) is released from the adhered sub-elements (1, 2), wherein the support element (3) is detached from the first sub-element (1) preferably along a release layer (34), in particular a silicone layer, wherein an adhesive layer (11) of the first sub-element is released, by means of which adhesive layer the security element (4) can be adhered to a surface, in particular a windscreen (6) of a vehicle.

15. Security element (4) in the form of a vignette for a vehicle, obtainable by means of a method according to one of claims 11 to 14, which is preferably adhered to a windscreen (6) of a vehicle.

## Revendications

1. Système (100, 200, 300, 400, 500, 600) servant à fabriquer un élément de sécurité (4) sous la forme d'une vignette destinée à être collée à un substrat cible, pour une surface, en particulier une vitre d'inspection (6) d'un moyen de transport, comprenant un élément de support (3) avec une première et une seconde surface, dans lequel un premier élément partiel (1) de l'élément de sécurité (4) est disposé dans une première zone (31) de la première surface, et un second élément partiel (2) de l'élément de sécurité (4) est disposé dans une seconde zone (32), séparée par une arête de pliage (33) de la première zone (31), de la première surface, lequel peut être amené en superposition avec le premier élément partiel (1) par le pliage de l'élément de support (3) le long de l'arête de pliage (33), dans lequel le second élément partiel (2) présente un adhésif (25), lequel est disposé sur le côté, opposé à l'élément de support (3), du second élément partiel (2), et dans lequel une caractéristique de personnalisation (14) peut être appliquée sur un côté, opposé à l'élément de support (3), du premier élément partiel (1) et/ou du second élément partiel (2), dans lequel le second élément partiel (2) présente dans toutes les directions placées dans le plan d'extension de l'élément de support (3), une largeur d'extension plus grande que le premier élément partiel (1).

2. Système (100, 200, 300, 400, 500, 600) selon la revendication 1,
**caractérisé en ce**
**que** le premier (1) et/ou le second élément partiel (2) comprend au moins une couche de réplication (23), dans laquelle est pratiquée au moins une structure en relief, dans lequel la couche de réplication (3) présente de manière préférée une épaisseur de couche de 0,2 à 20 µm, de manière préférée de 0,5 à 5 µm et de manière particulièrement préférée de 0,5 à 2,5 µm et l'au moins une structure en relief est réalisée de préférence en particulier en tant qu'une structure de réseau diffractive mono- ou bidimensionnelle, en particulier avec une fréquence spatiale entre 100 lignes/mm et 2500 lignes/mm, de manière préférée entre 1000 lignes/mm et 2000 lignes/mm.

3. Système (100, 200, 300, 400, 500, 600) selon l'une quelconque des revendications 1 ou 2,
**caractérisé en ce**
**que** le premier (1) et/ou le second élément partiel (2) présente au moins une couche de réflexion (24), en particulier une couche de métal ou une couche à haut indice de réfraction (HRI), laquelle est réalisée de préférence en forme de motif, en particulier sous la forme d'une première information optique.

4. Système (100, 200, 300, 400, 500, 600) selon l'une quelconque des revendications 1 à 3,
**caractérisé en ce**
**que** le premier (1) et/ou le second élément partiel (2) comprend au moins une couche (13) partielle à variation optique et/ou un système de couches, qui est réalisée de préférence de telle manière qu'elle contient au moins une matière avec un effet optique différent selon l'angle d'observation et/ou au moins une couche à cristaux liquides avec un effet optique différent selon l'angle d'observation et/ou un empilement de couches à film mince avec un effet de couleur d'interférence selon l'angle d'observation et/ou une couche de réplication (23) avec une structure en relief pratiquée, laquelle est réalisée en particulier selon l'une quelconque des revendications 2 ou 3.

5. Système (100, 200, 300, 400, 500, 600) selon l'une quelconque des revendications 1 à 4,
**caractérisé en ce**
**que** le premier élément partiel (1) comprend une première couche de colle (11), en particulier servant à coller l'élément de sécurité (4) au pare-brise (6) du moyen de transport, et que la première couche de colle (11) est disposée sur le côté, tourné vers l'élément de support (3), du premier élément partiel (1), laquelle est de manière préférée une couche de colle à froid, en particulier avec une épaisseur de couche de 1 à 40 µm, de manière préférée de 5 à 25 µm et de manière particulièrement préférée de 10 à 20 µm.

6. Système (100, 200, 300, 400, 500, 600) selon l'une quelconque des revendications 1 à 5,
**caractérisé en ce**
**que** les adhésifs (25) servant à coller le premier et le second élément partiel comprennent une seconde couche de colle (25a), en particulier une couche de colle à froid, dans lequel les adhésifs (25) comprennent de manière préférée une couche à décoller (25b, 25c), en particulier une couche de papier siliconée pouvant être décollée, qui est appliquée sur le côté opposé à l'élément de support (3) sur la seconde couche de colle (25a) et laquelle dépasse au moins par endroits en particulier de la seconde couche de colle (25a) située en dessous.

7. Système (100, 200, 300, 400, 500, 600) selon la revendication 6,
**caractérisé en ce**
**que** la couche à décoller (21) s'étend dans le plan de surface de l'élément de support dans au moins une direction au-delà d'au moins une autre couche du second élément partiel (2).

8. Système (100, 200, 300, 400, 500, 600) selon l'une quelconque des revendications 6 ou 7,
**caractérisé en ce**
**que** le second élément partiel (2) présente au moins une couche d'adhésion (22), qui possède par endroits différentes propriétés d'adhérence par rapport aux couches (21, 23) adjacentes et en particulier augmente ou réduit l'adhérence des couches (21, 23) adjacentes, aux emplacements au niveau desquels elle est prévue.

9. Système (100, 200, 300, 400, 500, 600) selon la revendication 8,
**caractérisé en ce**
**que** la couche d'adhérence (22) comprend une couche de cire (22b) partielle ou une couche de colle partielle.

10. Système (100, 200, 300, 400, 500, 600) selon l'une quelconque des revendications 1 à 9,
**caractérisé en ce**
**que** le premier (1) et/ou le second élément partiel (2) présente une coupe (16, 26), laquelle s'étend depuis une surface, opposée à l'élément de support (3), de l'élément partiel (1, 2) respectif de manière perpendiculaire par rapport au plan d'extension de la couche de support (3) à travers au moins une couche de l'élément partiel (1, 2) respectif.

11. Procédé servant à personnaliser un élément de sécurité (4) sous la forme d'une vignette destinée à être collée à un substrat de cible pour un pare-brise (6) d'un véhicule, avec les étapes :
a) de fourniture d'un système (100, 200, 300, 400, 500, 600) selon l'une quelconque des revendications 1 à 10 ;
b) d'application d'une caractéristique de personnalisation (14) sur un côté, opposé à l'élément de support (3), du premier (1) et/ou du second élément partiel (2) ;
c) de pliage de l'élément de support (3) le long de l'arête de pliage (33), dans lequel les éléments partiels (1, 2) sont amenés en superposition l'un avec l'autre de telle sorte que le second élément partiel (2) dépasse de tous les côtés du premier élément partiel (1) ;
d) de collage des éléments partiels (1, 2) au moyen de l'adhésif (25) disposé sur le côté, opposé à l'élément de support (3), du second élément partiel (2).

12. Procédé selon la revendication 11,
**caractérisé en ce**
**que** la caractéristique de personnalisation (14) est appliquée par impression, dans lequel de manière préférée un numéro de série, un nom, un numéro d'immatriculation de véhicule automobile ou similaire est appliqué en tant que caractéristique de personnalisation (14).

13. Procédé selon l'une quelconque des revendications 11 ou 12,
**caractérisé en ce**
**qu'**avant le pliage lors de l'étape c), une couche à décoller (25b, 25c), en particulier une couche de papier siliconée pouvant être décollée est décollée d'une surface, opposée à l'élément de support (3), du second élément partiel (2) et une seconde couche de colle (25a) de l'adhésif (25) comprenant la couche à décoller (25b, 25c) et la seconde couche de colle (25a) est dégagée aux fins du collage lors de l'étape d).

14. Procédé selon l'une quelconque des revendications 11 à 13,
**caractérisé en ce**
**que** lors d'une autre étape e), l'élément de support (3) est décollé des éléments partiels (1, 2) collés, dans lequel l'élément de support (3) est décollé de manière préférée le long d'une couche à décoller (34), en particulier d'une couche de silicone, du premier élément partiel (1), dans lequel une couche de colle (11) du premier élément partiel est dégagée, au moyen de laquelle l'élément de sécurité (4) peut être collé à une surface, en particulier à un pare-brise (6) d'un véhicule.

15. Elément de sécurité (4) sous la forme d'une vignette pour un véhicule, pouvant être obtenu au moyen d'un procédé selon l'une quelconque des revendications 11 à 14, lequel est collé de manière préférée à un pare-brise (6) d'un véhicule.
